# EUROPEAN PATENT APPLICATION

(11) **EP 3 432 029 A1**
(43) Date of publication of application: **23.01.2019**
(21) Application number: 17182559.9
(22) Date of filing: 21.07.2017
(51) Int. Cl.: G01S 15/02, G01S 15/89

(54) **UNDERWATER MAPPING METHOD AND SYSTEM**

(71) Applicant: Ebeson AB, 411 26 Göteborg (SE)
(72) Inventor: BORG, Göran, 411 26 GÖTEBORG (SE)
(74) Representative: AWA Sweden AB

(57) **Abstract**

A method and system for mapping an object located on an ocean floor are presented. The method comprises acquiring sonar data of the object in order to form a first three-dimensional point cloud, acquiring photogrammetry data of the object in order to form a second three-dimensional point cloud, and acquiring positional data of the object in order to form a geographical reference grid related to the object. The method further comprise combining the first three-dimensional point cloud, the second three-dimensional point cloud and the geographical reference grid and generating a three-dimensional geographic representation of said object. Hereby, an accurate and versatile 3D mapping of underwater objects such as e.g. ship wrecks is achieved, whereby planning and execution of underwater missions related to these objects can be done with less uncertainties and at a lower cost. Also, a method for determining volume and content of a liquid contaminant contained within a tank of a sunken ship, based on the mapping method, is presented.

## Description

### TECHNICAL FIELD OF THE INVENTION

The present invention relates to a method and system for mapping of subsea or underwater objects. The present invention also relates to a method for determining volume and content of a liquid contaminant contained within a tank of a sunken ship based on the mapping of the underwater object.

### BACKGROUND

There is an immense number of sunken ships, or wrecks, resting on the ocean floor all around the world. For example, there is an estimated number of 1700 ship wrecks resting outside of the coast of Sweden alone. Each of these ships poses an environmental threat due to liquid contaminants (e.g. crude oil, diesel, toxic chemicals, etc.) remaining in various tanks within the ship at the time of sinking. To some extent, these ship wrecks can be considered to be ticking time bombs where the liquid contaminants may start to leak and thereby cause additional ocean pollution. However, in some cases, these wrecks have started to slowly leak these environmentally hazardous contaminants into the ocean and therefore already constitute an environmental threat.

There is therefore a need for a method to effectively deal with these sunken ships in order to remove the liquid contaminants or in some other way neutralize the threat.

To this end, conventionally used methods, such as manual recovery methods are not suitable or not even possible for depths below 40 meters, as the safety of the diver cannot be guaranteed. Moreover, they are generally neither time nor cost effective.

As a remedy to this, remotely operated vehicles (ROVs) for this purpose have been proposed, and an example is disclosed in US 2007/0261629. Such and similar methods and system which utilize ROVs often rely on "pumping solutions" where the tanks holding liquid contaminants are found by the ROVs and subsequently pumped to a container above the water surface. However, using ROVs and pumping equipment to transport the liquid contaminants to the surface introduces additional risks polluting the water due to unexpected leakages and the like. In particular, there is a relatively large risk of inaccurate placement of the openings/holes needed to access the liquid contaminants within the sunken tanks due to inaccurate mapping of the ship wreck and/or poor visibility during operating.

Accordingly, currently known systems and methods are often too inaccurate to ensure precise planning and execution of the needed openings to access the liquid contaminants within the sunken tanks. Thus, there is a need for improvement in the art, in particular in relation to the mapping of the situation on the ocean floor.

### SUMMARY OF THE INVENTION

It is therefore an object of the present invention to provide a method and system for mapping an object located on an ocean floor, which alleviates all or at least some of the above-discussed drawbacks of the presently known solutions.

This object is achieved by means of a method and system for mapping an object located on an ocean floor as defined in the appended claims.

It is another object of the present invention to provide a method for determining volume and content of a liquid contaminant contained within a tank of a sunken ship which at least partly overcomes the problems associated with presently known solutions.

In the present context, the term exemplary is to be understood as serving as an example, instance, or illustration.

According to a first aspect of the present invention, there is provided a method for mapping an object (such as e.g. a ship wreck) located on an ocean floor. The method comprises:
acquiring sonar data of the object from an echo sounder system in order to form a first three-dimensional point cloud from the sonar data;
acquiring photogrammetry data of the object from at least one camera mounted to one of a remotely operated vehicle (ROV) and an autonomous underwater vehicle (AUV) in order to form a second three-dimensional point cloud from the photogrammetry data;
acquiring positional data of the object from a Global Navigation Satellite System (GNSS) in order to form a geographical reference grid related to the object;
combining the first three-dimensional point cloud, the second three-dimensional point cloud and the geographical reference grid and generating a three-dimensional geographic representation of the object.

Hereby a cost effective method for mapping objects located on the ocean floor with high accuracy is presented. More specifically, the inventive method provides for the necessary information of the situation on the ocean floor for subsequent high precision operations with ROVs or AUVs, whereby the planning and execution of underwater missions related to these objects can be done with less uncertainties and at a lower cost.

In the present context, an object located on an ocean floor is to be understood as an underwater object including any type of underwater environment in which the object may be located, such as e.g. saltwater locations such as seas and oceans, and freshwater locations. Also, an ROV is to be understood as a remotely operated underwater vehicle that is tethered to a host (e.g. a surface ship) while an AUV is an autonomous underwater vehicle that is not tethered to a host. The ROV and the AUV are unmanned and generally operated by a pilot on board the host, however, the pilot may also be more at a more remote location operating via a suitable wireless connection.

The present invention is based on the realization that by combining high resolution underwater mapping techniques with a high resolution GNSS grid in order to generate a 3D model of the "situation" on the ocean floor one can provide the possibility to execute subsequent operations with an unprecedented accuracy. In more detail, it was realized that currently known methods and systems for mapping underwater structures are inadequate when it comes to providing high resolution models of the structure. This in turn negatively affected the accuracy and reliability of the subsequent operations. Thus, the present inventor realized that the added high resolution GNSS grid (e.g. GPS grid) further increases the correctness of the 3D representation in reference to the real life object since the distances between various parts or portions of the object are more accurately mapped.

Stated differently, the combination of these three techniques for mapping the underwater object allows for precise 3D representations of the object and they can furthermore be provided in a digital format whereby scaled physical models (by means of e.g. 3D printing) or virtual reality (VR) models can be realized. In particular, in the latter case, the whole operation (e.g. measurement and neutralization of the liquid contaminants) can be performed in a virtual training environment prior to the real life execution whereby the chance of a successful live operation is increased. Moreover, accurate representations of the objects generally result in less surprises (e.g. unanticipated structural details) during the actual missions.

Further, the first three-dimensional point cloud may for example be generated by means of a multibeam echo sounder system having one or more receivers, in the latter case the system may be configured to hold two or more sound pulses in the water simultaneously and thereby provide high resolution data in both a lateral and a longitudinal direction. From this data, the first three-dimensional point cloud can be formed/generated. The second three-dimensional point cloud is generated from photogrammetry data provided by a camera mounted on an underwater vehicle (ROV or AUV). In more detail, the camera is preferably configured to take high resolution images of the object located on the ocean floor. The images are taken in an overlapping manner whereby a three-dimensional point cloud can be generated by processing the images, e.g. by using Structure from Motion (SfM) technique. The "surveying" with the echo sounder system may for example be made over an area of 100 m by 100 m, 200 m by 200 m or 250 m by 250 m, pending on the situation.

Moreover, the data from any of the three-dimensional point clouds is preferably filtered in some suitable Computer Aided Design (CAD) software whereby unnecessary data can be removed and a polygon mesh can be created from the filtered point cloud(s). The polygon mesh can subsequently be converted to any suitable file format (such as e.g. STL, stereolithography). The STL file may subsequently be used to create a CAD model of the object and surrounding area which can be manufactured as a scaled model by means of 3D printing or (Computer numerical control) CNC machining. The STL file may be converted to other suitable file formats, such as e.g. FBX (Filmbox) or OBJ, for real time visualization in 3D, virtual reality (VR) or augmented reality (AR). In more detail, the 3D representation of the object can be used to generate virtual reality multimedia data or augmented reality multimedia data. The VR multimedia data can then be used to form a virtual training environment for pilots/operators of the ROV which is to be used in the subsequent underwater operations. Herby, the whole underwater can be made more efficient and precise at a lower cost as compared to presently known solutions.

The high resolution 3D representation of the object is then combined with a geographical reference grid acquired by means of a GNSS (e.g. GPS, Beidou, GLONASS, Galileo, etc.) in order to add measuring points or coordinates to the 3D representation and further increase the accuracy of the 3D representation. In more detail, acquiring positional data related to the object may in the present context be construed as acquiring a GNSS position of the object, or more specifically of different portions of the object. The geographical reference grid may for example have a size of less than 50x50 cm, preferably less than 25x25 cm, and more preferably less than 10x10 cm. The defined sizes are to be understood as the dimensions of each square forming the grid or matrix.

The end product from the inventive mapping method is referred to as a three-dimensional geographic representation of the object since it is a three-dimensional model of the object comprising geographic positional data (e.g. GPS data).

Further, in accordance with an exemplary embodiment of the present invention, the step of combining the first three-dimensional point cloud, the second three-dimensional point cloud and the geographical reference grid further comprises:
correlating the second three-dimensional point cloud with the first three-dimensional point cloud in order to form a third three-dimensional point cloud; and
combining the three-dimensional point cloud with the geographical reference grid.

Here, the two sets of 3D data are combined and correlated in order to form a more accurate three-dimensional representation of the object and optionally the surrounding environment, before the geographical reference grid is added.

Even further, in accordance with another exemplary embodiment of the present invention, the step of acquiring photogrammetry data comprises:
acquiring stereophotogrammetry data from the at least one camera mounted to one of the ROV or the AUV.

In more detail, stereophotogrammetry may be understood as estimating the three-dimensional coordinates of points on an object employing measurements made in two or more photographic images taken from different angles or positions, after which common points are identified on each image. A line of sight can be constructed from the camera location to the point on the object. It is the intersection of these lines (triangulation) that determines the three-dimensional location of the point. However, more advanced algorithms can exploit other information about the scene that is known a priori, for example symmetries, in some cases allowing reconstructions of 3-D coordinates from only one camera position. However, in accordance with an exemplary embodiment of the present invention, the step of acquiring photogrammetry data comprises:
acquiring stereophotogrammetry data from at least two different angles from the at least one camera mounted to one of the ROV or the AUV.

Moreover, in accordance with yet another embodiment of the present invention the step of acquiring positional data of the object from a Global Navigation Satellite System (GNSS) comprises acquiring positional data of the object from a Relative Global Navigation Satellite System (RGNSS) or Differential Global Navigation Satellite System (DGNSS). By means of an RGNSS, the position of the ship (often referred to as rover) is determined by comparing the positional data retrieved from the GNSS-satellites and to a known (static) reference receiver which is connected to the same GNSS-satellites. In other words, the rovers position is also determined relative to the known reference receiver. The positional data may be formed in real time or from post-mission processing. Thus, in accordance with another embodiment of the invention, the GNSS may be a Real Time Kinematic (RTK) system. Alternatively, the step of acquiring positional data of the object from a Global Navigation Satellite System (GNSS) comprises acquiring positional data of the object from a Differential Global Navigation Satellite System (DGNSS). DGNSS is similar to the RGNSS in that the position of the rover is determined relative to a reference receiver, but differs in that the DGPS reference receiver must be placed at a known location. The above discussed differential and relative positioning techniques provide a more accurate geographical reference grid as compared to the common single point positioning techniques as they are capable of providing resolutions down to less than 10 cm.

Further, in accordance with another aspect of the present invention there is provided a method for determining volume and content of a liquid contaminant contained within a tank of a sunken ship, the method comprising:
mapping the sunken ship and a surrounding environment according to a method in accordance with any one of the preceding claims in order to generate a three-dimensional geographic representation of the sunken ship;
determining a location of the tank in the three-dimensional geographic representation of the sunken ship;
defining a position for forming an opening in the tank based on the three-dimensional geographic representation of the sunken ship;
forming an opening in the tank at the defined position; and
inserting a measuring unit into the tank via the opening.

Hereby presenting a method for accurately analyzing the situation in a subsea environment in a time efficient and cost effective manner. The inventive method of the second aspect of the invention provides means for extracting accurate information which can serve as support for any decisions which have to be made regarding the management or handling of the contents of the tanks.

With this aspect of the invention, similar advantages and preferred features/embodiments are present as in the previously discussed aspects of the invention.

Yet further, in accordance with another aspect of the present invention, there is provide a system for mapping an object located on an ocean floor, the system comprising:
an echo sounder system for acquiring sonar data of the object;
a Global Navigation Satellite System (GNSS) for acquiring positional data of the object;
at least one camera mounted to one of a remotely operated vehicle (ROV) and an autonomous underwater vehicle (AUV) for acquiring photogrammetry data; and
at least one processing unit configured to:
   form a first three-dimensional point cloud from the sonar data,
   form a second three-dimensional point cloud from the photogrammetry data,
   form a geographical reference grid of the object from the positional data, and
   combine the first three-dimensional point cloud, the second three-dimensional point cloud and the geographical reference grid and generate a three-dimensional geographic representation of the object.

With this aspect of the invention, similar advantages and preferred features/embodiments are present as in the previously discussed aspects of the invention. For example, the Global Navigation Satellite System is a Relative Global Navigation Satellite System or a Differential Global Navigation Satellite System.

These and other features of the present invention will in the following be further clarified with reference to the embodiments described hereinafter.

### BRIEF DESCRIPTION OF THE DRAWINGS

For exemplifying purposes, the invention will be described in closer detail in the following with reference to embodiments thereof illustrated in the attached drawings, wherein:
Fig. 1 is a flow chart representation of a method for mapping an object located on an ocean floor in accordance with an embodiment of the present invention;
Fig. 2 is a schematic perspective view illustration of a system for mapping an object located on an ocean floor in accordance with an embodiment of the present invention;
Fig. 3 is a flow chart representation of a method for determining volume and content of a liquid contaminant contained within a tank of a sunken ship based on a mapping of the sunken ship in accordance with an embodiment of the present invention.

### DETAILED DESCRIPTION

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

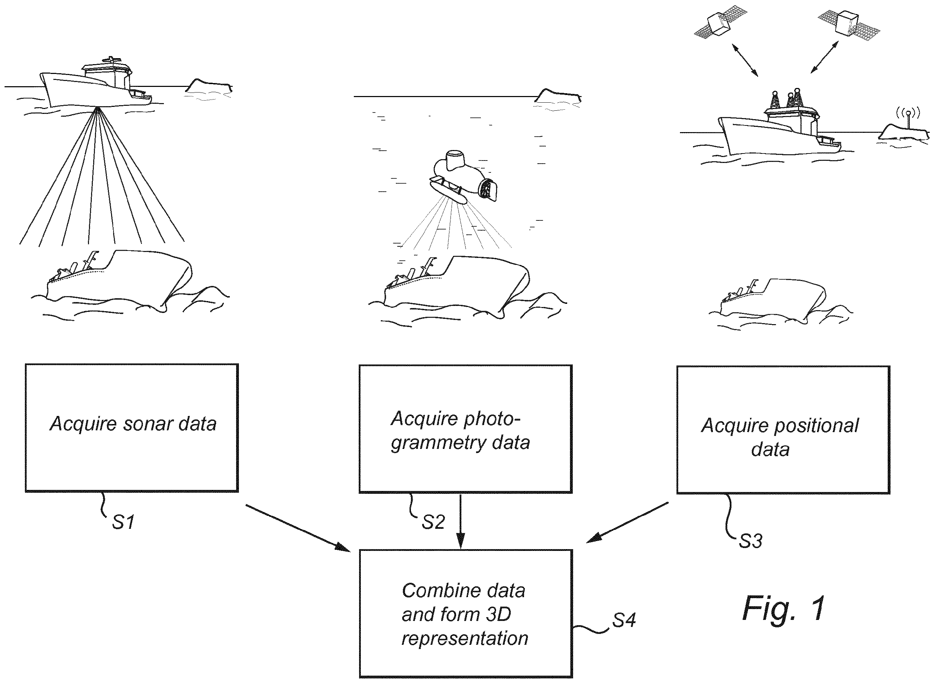

Fig. 1 shows an illustrative flow chart representation of a method for mapping an object, here in the form of a ship wreck, located on an ocean floor. The method includes a step of acquiring S1 sonar data of the objected from an echo sounder system, e.g. a multibeam echo sounder system, in order to generate or form a first three-dimensional point cloud from the sonar data. An example of a suitable multibeam echo sounder is EM2040 available from Kongsberg Maritime.

Further, photogrammetry data is acquired S2 in order to generate or form a second three-dimensional point cloud from the photogrammetry data. As indicated in the illustration above the box S2, this step comprises taking high resolution photos or images of the ship wreck by means of one or more cameras mounted to an ROV or an AUV. In more detail, the step of acquiring photogrammetry data S2 may include acquiring stereophotogrammetry data where the ROV or AUV is controlled or configured to acquire a first set of images comprising multiple overlapping photos of the wreck from a top view perspective, i.e. from a vertically elevated position, and subsequently a second set of images comprising multiple overlapping photos from a side view perspective. All photos are subsequently processed in e.g. manually by means of a stereoplotter or by an automated desktop system in order to generate the second three-dimensional point cloud.

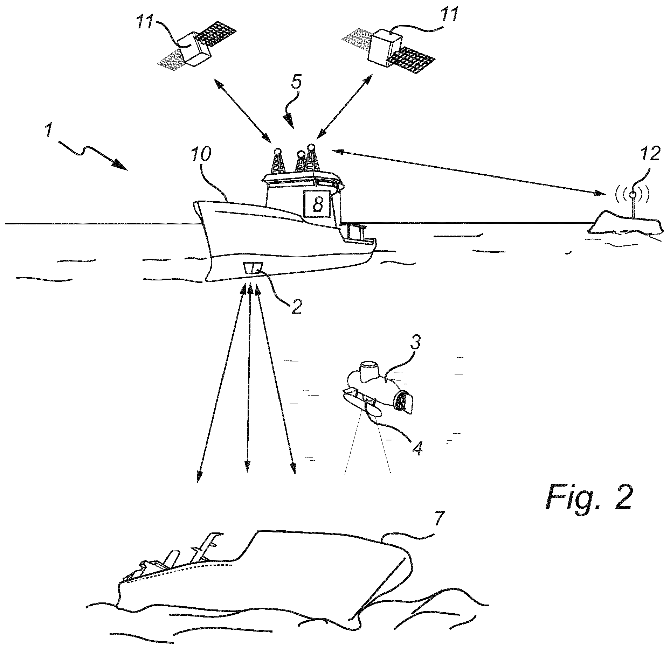

Still further, positional data (e.g. GPS data) of the ship wreck is acquired S3 in order to generate or form a geographical reference grid related to the object. Preferably, the positional data is acquired by means of an advanced positioning system, such as e.g. a DGNSS or RGNSS. As indicated in the drawing above the box S3 in Fig. 1, the position of the ship (often referred to as rover) is determined by comparing the positional data retrieved from the GNSS-satellites and to a known (static) reference point (base station, e.g. ref 12 in Fig. 2) which is connected to the same GNSS-satellites. The positional data may be formed in real time or from post-mission processing.

Next, the first three-dimensional point cloud, the second three-dimensional point cloud and the geographical reference grid are combined S4 whereby a three-dimensional geographic representation of the objected is generated. In some embodiments, the first and second three-dimensional point clouds may be correlated and combined in order to form a third three-dimensional point cloud prior to the addition of the geographical reference grid.

Fig. 2 is a schematic perspective view illustration of a system 1 for mapping an object, here in the form of a ship wreck 7, located on an ocean floor. The system 1 has an echo sounder system 2 for acquiring sonar data of the ship wreck, and a GNSS 5 for acquiring positional data related to the ship wreck 7. Moreover, the system comprises one or more cameras 4 mounted to an ROV/AUV 3 in order to acquire photogrammetry data. The positional data is acquired by means of an advanced positioning system, such as e.g. a DGNSS or RGNSS. The position of the ship 10 (often referred to as rover) is determined by comparing the positional data retrieved from the GNSS-satellites 11 and to a known (static) reference point 12 which is connected to the same GNSS-satellites 11. The positional data may be formed in real time or from post-mission processing.

Further, the system has one or more processing units 8 configured to form a first three-dimensional point cloud from the sonar data, a second three-dimensional point cloud from the photogrammetry data and a geographical reference grid (e.g. GPS grid) related to the object from the retrieved positional data. Subsequently, the point clouds and the geographical reference grid are combined in order to generate a three-dimensional geographic representation of the object. Naturally each of these processes may be performed by separate processing units or by the same processing unit. Each processing unit 8 is preferably realized as a software controlled processor. However, the processing unit 8 may alternatively be realized wholly or partly in hardware.

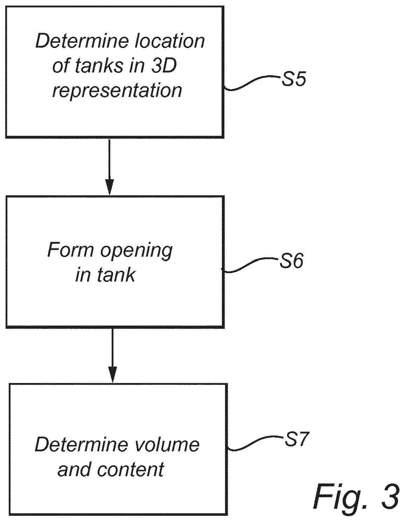

The generated three-dimensional geographic representation can be used in a control system of an ROV in subsequent underwater operations, such as e.g. investigating subsea terrain suitable for holding wind power stations or determining volume and content of liquid contaminants in ship wrecks. About the latter, and as illustrated in the flow chart representation of Fig. 3, the resulting three-dimensional geographic representation of the ship wreck (sunken ship) may be used in a method for determining volume and content of a liquid contaminant contained within a tank of the ship wreck. Thus, after the ship wreck has been mapped, e.g. in accordance with an embodiment of the method described in reference to Fig. 1, a location of the tank in the three-dimensional geographic representation of the sunken ship is determined S5 and a suitable position for forming an opening in the tank is defined. In general, a suitable position would be at a lower end of the tank oil based contaminants (e.g. crude oil, diesel, gasoline) would be pushed towards the top of the tank. These steps are preferably done in a virtual reality environment where there is a virtual 3D model of the ship and the surrounding area. An advantage with the VR realization is that the pilot or ROV operator which is to control an ROV which will perform the underwater operation can train in the VR environment such that angles of approach, and maneuver paths can be optimized prior to the live mission. Since the generated three-dimensional representation is so accurate, the probability of a successful mission can be increased.

Next, an opening is formed S6 in the tank of the ship wreck at the previously defined position, and a measuring unit is inserted into the tank in order determine the volume of liquid contaminant and type of liquid contaminant in the tank. This information can subsequently be used in order to determine if there is a need for further missions in order to remove or neutralize the liquid contaminant (e.g. by injecting a solidifying agent into the tank).

Even though the invention has been described with reference to specific exemplifying embodiments thereof, many different alterations, modifications and the like will become apparent for those skilled in the art. Variations to the disclosed embodiments can be understood and effected by the skilled addressee in practicing the claimed invention, from a study of the drawings, the disclosure, and the appended claims. Furthermore, in the claims, the word "comprising" does not exclude other elements or steps, and the indefinite article "a" or "an" does not exclude a plurality.

## Claims

1. A method for mapping an object located on an ocean floor, said method comprising:
acquiring sonar data of said object from an echo sounder system in order to form a first three-dimensional point cloud from said sonar data;
acquiring photogrammetry data of said object from at least one camera mounted to one of a remotely operated vehicle (ROV) and an autonomous underwater vehicle (AUV) in order to form a second three-dimensional point cloud from said photogrammetry data;
acquiring positional data of said object from a Global Navigation Satellite System (GNSS) in order to form a geographical reference grid related to said object;
combining said first three-dimensional point cloud, said second three-dimensional point cloud and said geographical reference grid and generating a three-dimensional geographic representation of said object.

2. The method according to claim 1, wherein the step of combining said first three-dimensional point cloud, said second three-dimensional point cloud and said geographical reference grid further comprises:
correlating said second three-dimensional point cloud with said first three-dimensional point cloud in order to form a third three-dimensional point cloud; and
combining said three-dimensional point cloud with said geographical reference grid.

3. The method according to any one of the preceding claims, wherein said step of acquiring photogrammetry data comprises:
acquiring stereophotogrammetry data from said at least one camera mounted to one of the ROV or the AUV.

4. The method according to claim 3, wherein said step of acquiring photogrammetry data comprises:
acquiring stereophotogrammetry data from at least two different angles from said at least one camera mounted to one of the ROV or the AUV.

5. The method according to any one of the preceding claims, wherein said step of acquiring positional data of said object from a Global Navigation Satellite System (GNSS) comprises acquiring positional data of said object from a Relative Global Navigation Satellite System (RGNSS) or Differential Global Navigation Satellite System (DGNSS).

6. The method according to any one of the preceding claims, wherein each square in said geographical reference grid has a size of less than 50x50 cm, preferably less than 25x25 cm, and more preferably less than 10x10 cm.

7. A method for determining volume and content of a liquid contaminant contained within a tank of a sunken ship, said method comprising:
mapping the sunken ship and a surrounding environment according to a method in accordance with any one of the preceding claims in order to generate a three-dimensional geographic representation of the sunken ship;
determining a location of the tank in the three-dimensional geographic representation of the sunken ship;
defining a position for forming an opening in the tank based on the three-dimensional geographic representation of the sunken ship;
forming an opening in the tank at the defined position; and
inserting a measuring unit into said tank via said opening.

8. A system for mapping an object located on an ocean floor, said system comprising:
an echo sounder system for acquiring sonar data of said object;
a Global Navigation Satellite System (GNSS) for acquiring positional data of said object;
at least one camera mounted to one of a remotely operated vehicle (ROV) and an autonomous underwater vehicle (AUV) for acquiring photogrammetry data; and
at least one processing unit configured to:
form a first three-dimensional point cloud from said sonar data,
form a second three-dimensional point cloud from said photogrammetry data,
form a geographical reference grid of said object from said positional data, and
combine said first three-dimensional point cloud, said second three-dimensional point cloud and said geographical reference grid and generate a three-dimensional geographic representation of said object.

9. The system according to claim 8, wherein said Global Navigation Satellite System is a Relative Global Navigation Satellite System.

10. The system according to claim 8 or 9, wherein said echo sounder system is a multibeam echo sounder system.

11. The system according to any one of claims 8-10, wherein each square in said geographical reference grid has a size of less than 50x50 cm, preferably less than 25x25 cm, and more preferably less than 10x10 cm.
